# EUROPÄISCHE PATENTSCHRIFT

(11) **EP 1 391 359 B1**
(45) Veröffentlichungstag und Bekanntmachung des Hinweises auf die Patenterteilung: **26.01.2005**
(21) Anmeldenummer: 03018420.4
(22) Anmeldetag: 13.08.2003
(51) Int. Cl.: B60R 25/10

(54) **Verfahren und Vorrichtung zur Überwachung eines Kraftfahrzeugs**
Method and device for monitoring a vehicle
Procédé et dispositif pour surveiller un véhicule

(30) Priorität: 20.08.2002 DE 10238039
(43) Veröffentlichungstag der Anmeldung: 25.02.2004
(73) Patentinhaber: Delphi Technologies, Inc., Troy, MI 48007 (US)
(72) Erfinder: Sokolovs, Victor, 40699 Erkrath (DE); Botschen, Dirk, 51149 Köln (DE)
(74) Vertreter: Manitz, Finsterwald & Partner GbR

(56) Entgegenhaltungen:
- WO-A-93/05490
- DE-A- 19 733 579
- CARSTEN SCHMAL ET AL: "Nachvollziehbarer Diebstahlschutz" SIEMENS TECHNIK REPORT, Bd. 3, Nr. 8, Juli 2000 (2000-07), Seite 53 XP007002155

## Beschreibung

Die Erfindung betrifft ein Verfahren und eine Vorrichtung zur Überwachung eines Kraftfahrzeugs, insbesondere zur Dokumentation eines Diebstahls des Kraftfahrzeugs oder eines Einbruchs in das Kraftfahrzeug.

Grundsätzlich sind derartige Verfahren und Vorrichtungen bekannt. Typischerweise liegt diesen Diebstahlsüberwachungsverfahren bzw. -vorrichtungen die Idee zugrunde, dass ein Kraftfahrzeug oder ein in einem verriegelten Kraftfahrzeug befindlicher Gegenstand nur dann gestohlen werden kann, wenn entweder das Fahrzeug nicht ordnungsgemäß verriegelt bzw. verschlossen ist oder ein Dieb entweder im Besitz eines passenden Kraftfahrzeugtürschlüssels ist oder sich gewaltsam Zugang zu dem Kraftfahrzeug verschafft. Zur Aufdeckung eines möglichen Versicherungsbetruges haben insbesondere Versicherungsunternehmen im Falle von vermeintlich gestohlenen Kraftfahrzeugen bzw. vermeintlich gestohlenen Gegenständen aus verriegelten Kraftfahrzeugen ein großes Interesse an der Möglichkeit, einen Diebstahl oder Einbruch rekonstruieren zu können.

Bei bekannten Überwachungsverfahren bzw. Überwachungsvorrichtungen werden deshalb nach der Verriegelung des Kraftfahrzeugs oder nach Aktivierung einer Diebstahlwarnanlage Veränderungen in den Schließzuständen nicht nur der Fahrzeugtüren sondern beispielsweise auch der Heckklappe, der Motorhaube oder der Tankklappe detektiert. Dadurch wird jeweils festgestellt, ob eine Fahrzeugtür oder -klappe geöffnet oder verschlossen wurde. Die erfassten Zustandsänderungen werden beispielsweise zusammen mit dem jeweiligen Kilometerstand des Kraftfahrzeugs, bei dem eine Änderung detektiert wird, in einer Speichereinrichtung abgespeichert.

Durch Auslesen der abgespeicherten Daten aus der Speichereinrichtung kann nach einem Einbruch in das Kraftfahrzeug oder bei einem Diebstahl des Kraftfahrzeugs, sofern das Kraftfahrzeug wieder gefunden wird, nachvollzogen werden, ob und gegebenenfalls bei welchem Kilometerstand eine Tür oder Klappe des Kraftfahrzeugs geöffnet bzw. geschlossen wurde. Unter Umständen kann anhand dieser Daten festgestellt werden, dass eine Entriegelung des Fahrzeugs und gegebenenfalls ein Anlassen des Fahrzeugmotors durch einen autorisierten Schlüssel des Kraftfahrzeugs erfolgte, was auf einen vorgetäuschten Diebstahl oder Einbruch hindeuten könnte.

Die DE 197 33 579 beschreibt ein Verfahren und eine Vorrichtung zur Überwachung eines Kraftfahrzeugs, insbesondere zur Dokumentation eines Diebstahls des Kraftfahrzeugs. Als zu überwachender Fahrzeugparameter dient der Ort des Kraftfahrzeugs. Der jeweilige Ort wird gespeichert, und die Ortsangaben können angezeigt wird. Ein Vergleich zwischen dem gespeicherten Ort und dem aktuellen Ort vor dem Abspeichern des aktuellen Ortes ist nicht vorgesehen.

Ein ähnliches Konzept ist aus der WO 93/05490 A bekannt. Auch hier werden verschiedene Ortsangaben gespeichert. Ein Vergleich wird erst nach dem Speichern vorgenommen.

Der Bericht "Nachvollziehbarer Diebstahlschutz" von Carsten Schmal in Siemens Technik Report, Bd. 3, Nr. 8, 8. Juli 2000 (XP 7002155) sieht nur einen Speicher vor, der mit dem jeweils aktuellen Wert beschrieben wird. Ein Vergleich ist daher nicht möglich.

Der Erfindung liegt die Aufgabe zugrunde, ein Verfahren zur Überwachung eines Kraftfahrzeugs zu schaffen, das eine verbesserte Überwachung erreicht, und eine detailliertere Rekonstruktion eines Diebstahls des Kraftfahrzeugs oder eines Einbruchs in das Kraftfahrzeug ermöglicht.

Zur Lösung der Aufgabe ist das Überwachungsverfahren mit den Merkmalen des Anspruchs 1 vorgesehen.

Bei dem erfindungsgemäßen Verfahren wird aus einer vorgegebenen Menge von überwachbaren Fahrzeugparametern ein Satz von zu überwachenden Fahrzeugparametern ausgewählt, ein einen Ausgangszustand des Kraftfahrzeugs abbildender Ausgangsparametersatz der ausgewählten Fahrzeugparameter bestimmt und abgespeichert, eine nach der Bestimmung des Ausgangsparametersatzes erfolgende Änderung mindestens eines der ausgewählten Fahrzeugparameter detektiert und bei Änderung mindestens eines der ausgewählten Fahrzeugparameter wenigstens ein neuer Parametersatz bestimmt und zusätzlich abgespeichert, der den jeweils veränderten Ist-Zustand des Kraftfahrzeugs abbildet.

Indem erfindungsgemäß ein Ausgangsparametersatz bestimmt und abgespeichert wird, wird zu Beginn eines jeden Überwachungszeitraums zunächst einmal der Ausgangszustand des Kraftfahrzeugs festgestellt. Der Beginn eines Überwachungszeitraums kann beispielsweise durch die Verriegelung des Kraftfahrzeugs, durch die Aktivierung einer Diebstahlwarnanlage oder durch ein anderes vorbestimmtes Ereignis definiert sein.

Dadurch, dass zu Beginn eines jeweiligen Überwachungszeitraums, der jeweilige Ausgangszustand des Kraftfahrzeugs ermittelt wird, kann bei einer späteren Auswertung der aufgezeichneten Daten festgestellt werden, ob das Kraftfahrzeug in einem sicherheitstechnisch ordnungsgemäßen Zustand zurückgelassen wurde, d.h. ob bei einer Aktivierung der Diebstahlwarnanlage oder bei Verriegelung des Kraftfahrzeugs z.B. alle Türen korrekt verschlossen waren. Auf diese Weise könnte bei einem Einbruch in das Fahrzeug nachgewiesen werden, dass der Fahrzeughalter beispielsweise trotz Aktivierung der Diebstahlwarnanlage oder Verriegelung des Kraftfahrzeugs eine der Fahrzeugtüren nicht korrekt verschlossen hatte, was auf eine Mitschuld des Fahrzeughalters am Einbruch hindeuten könnte. Ebenso könnte eine Mitschuld des Fahrzeughalters ausgeschlossen werden, wenn aufgrund technischer oder sonstiger Mängel das Fahrzeug nicht ordnungsgemäß verschlossen werden konnte, ohne dass der Fahrzeughalter hiervon Kenntnis erlangt hätte.

Indem bei Änderung eines der ausgewählten Fahrzeugparameter wenigstens ein neuer Parametersatz bestimmt und zusätzlich abgespeichert wird, kann die Entwicklung des Fahrzeugzustandes über den gesamten Überwachungszeitraum hinweg aufgezeichnet werden. Es lässt sich im Nachhinein genau nachvollziehen, was mit dem Fahrzeug während des Überwachungszeitraums geschah, beispielsweise welche Fahrzeugtüren überhaupt und ggf. in welcher Reihenfolge geöffnet bzw. geschlossen wurden. Mit Hilfe der gespeicherten Datensätze lässt sich ein eventueller Diebstahl eines Kraftfahrzeugs bzw. Einbruch in ein Kraftfahrzeug deshalb besonders gut rekonstruieren.

Erfindungsgemäß ist außerdem die Auswahl eines Satzes von zu überwachenden Fahrzeugparametern aus einer vorgegebenen Menge von überwachbaren Fahrzeugparametern vorgesehen. Dadurch, dass eine Reihe von für eine Überwachung potentiell in Frage kommenden Fahrzeugparametern vorgegeben wird, aus der beliebige Parameter in beliebiger Kombination ausgewählt werden können, lässt sich das Verfahren leicht an unterschiedliche Überwachungsbedingungen, beispielsweise unterschiedliche Kraftfahrzeugtypen, anpassen, so dass das erfindungsgemäße Überwachungsverfahren vielseitig einsetzbar ist.

Vorteilhafte Ausführungsformen der Erfindung sind den Unteransprüchen, der Beschreibung und den Figuren zu entnehmen.

Gemäß einer bevorzugten Ausbildung der Erfindung wird die Änderung mindestens eines der ausgewählten Fahrzeugparameter anhand der jeweils zuletzt gespeicherten Parametereinstellung ermittelt. Dadurch wird gewährleistet, dass die Detektion der Zustandsänderung nicht anhand irgendeines weiter zurückliegenden Zustandes erfolgt, sondern dass sie anhand des Zustands beurteilt wird, der unmittelbar zuvor bestand. Mit anderen Worten handelt es sich bei den detektierten Änderungen um reine Relativänderungen.

Nach einer besonders bevorzugten Ausführungsform der Erfindung wird nach jeder Änderung mindestens eines der ausgewählten Fahrzeugparameter genau ein neuer Parametersatz bestimmt und gespeichert. Dies führt zu einer Ansammlung von einzelnen Parametersätzen, die immer nur dann punktuell aufgezeichnet werden, wenn eine Änderung des Kraftfahrzeugzustands eintritt. Dies bedeutet, dass während eines Überwachungszeitraums im Normalfall, d.h. wenn das Fahrzeug nicht gestohlen wird und nicht in das Fahrzeug eingebrochen wird, außer dem Ausgangsparametersatz keine weiteren Parametersätze zusätzlich gespeichert werden. Die bei der Überwachung anfallende Datenmenge, d.h. die zu verarbeitenden und zu speichernden Parametersätze, ist folglich reduziert. Dadurch ist das Verfahren nicht nur in seiner Effizienz erhöht, sondern es ist auch kostengünstiger als in beispielsweise einer zeitgesteuerten Ausführung, in der nach Ablauf von vorbestimmten oder zufällig festgelegten Zeitabständen neue Parametersätze bestimmt und zusätzlich abgespeichert werden.

Alternativ oder zusätzlich können nach Änderung mindestens eines der ausgewählten Fahrzeugparameter über einen vorbestimmten Zeitraum hinweg in vorbestimmten Zeitabständen neue Parametersätze bestimmt und abgespeichert werden. Anstelle einer einzelnen "Momentaufnahme" wird durch die Änderung eines Fahrzeugparameters in diesem Fall also eine filmartige Aufzeichnung des Kraftfahrzeugzustandes bzw. sich an die auslösende Zustandsänderung anschließender Parameteränderungen in Gang gesetzt, was eine detailliertere Rekonstruktion eines Diebstahl- oder Einbruchhergangs ermöglicht. Dabei braucht nicht die Änderung eines jeden der ausgewählten Fahrzeugparameter zu einer filmartigen Aufzeichnung zu führen. Es ist durchaus denkbar, dass ein Teil der ausgewählten Fahrzeugparameter bei Änderung lediglich eine Aufzeichnung eines einzelnen neuen Parametersatzes bewirkt, während die Änderungen anderer Fahrzeugparameter zu einer filmartigen Aufzeichnung führen.

Gemäß einer besonders vorteilhaften Ausführungsform des erfindungsgemäßen Überwachungsverfahrens werden der Ausgangsparametersatz und die jeweils neuen Parametersätze mittels einer Sendeeinheit an eine außerhalb des Fahrzeugs gelegene Speichereinrichtung gesendet und in dieser gespeichert. Die ermöglicht die Rekonstruktion eines Diebstahlhergangs selbst dann, wenn ein als gestohlen gemeldetes Kraftfahrzeug nicht mehr gefunden wird.

Bei der externen Speichereinrichtung kann es sich um eine einzelne zentrale Speichereinrichtung oder um einen Verbund von miteinander vernetzten, flächendeckend verteilten Speichereinrichtungen handeln, in denen die Daten aller durch das erfindungsgemäße Verfahren überwachten Kraftfahrzeuge gespeichert wird. Die Kommunikation zwischen der Speichereinrichtung und der Sendeeinrichtung des Kraftfahrzeugs kann beispielsweise mittels Funk oder via Satellit erfolgen.

Dabei kann die Kommunikation lediglich in eine Richtung stattfinden, d.h. Daten werden nur von der Sendeeinheit an die Speichereinrichtung gesendet und in dieser gespeichert, oder die Kommunikation kann in beide Richtungen erfolgen, d.h. die externe Speichereinrichtung empfängt nicht nur Signale von der Sendeeinheit des Kraftfahrzeugs, sondern sie ist gleichzeitig als Bestandteil einer Systemsteuerung ausgebildet, durch die Signale an das Kraftfahrzeug übermittelbar sind, beispielsweise um aus der vorgegebenen Menge von überwachbaren Fahrzeugparametern einen anderen Satz von zu überwachenden Fahrzeugparametern auszuwählen.

Besonders bevorzugt ist es, wenn aus dem ausgewählten Parametersatz eine Teilmenge von Fahrzeugparametern ausgewählt wird, auf welche die Detektion von Änderungen beschränkt ist. Es lassen sich dann nämlich gezielt solche Parameter auswählen, deren Änderung zur Aufzeichnung eines neuen Parametersatzes führt. Gleichzeitig kann der ausgewählte Parametersatz eine Reihe von zusätzlichen Parametern bzw. Daten enthalten, die zwar bei jeder Änderung eines ausgewählten Parameters mit abgespeichert werden, die von sich aus aber keine Aufzeichnung eines neuen Parametersatzes bewirken können. Solche Parameter, die nicht notwendigerweise eine Parametersatzaufzeichnung auslösen sollen, können beispielsweise das Datum, die Uhrzeit, der Kilometerstand und/oder der Ort des Fahrzeugs bei Änderung eines Fahrzeugparameters sein.

Der zu überwachende Parametersatz und/oder die Teilmenge von Fahrzeugparametern kann bzw. können bei der Herstellung des Kraftfahrzeugs ausgewählt werden. Dies kommt einer Voreinstellung bzw. Grundeinstellung des erfindungsgemäßen Verfahrens bei der Werksauslieferung des Kraftfahrzeugs gleich.

Vorteilhafterweise wird bzw. werden der Parametersatz und/oder die Teilmenge von Fahrzeugparametern zu einem späteren Zeitpunkt nach der Herstellung des Kraftfahrzeugs ausgewählt. Dies ermöglicht es, auch nachträglich noch eine veränderte Auswahl an zu überwachenden Fahrzeugparametern bzw. an solchen Parametern, deren Änderung eine Aufzeichnung auslöst, zu treffen, was die Flexibilität bei der Verwendung des erfindungsgemäßen Verfahrens weiter erhöht.

Gemäß einer besonders bevorzugten Ausbildung der Erfindung wird bzw. werden der Parametersatz und/oder die Teilmenge von Fahrzeugparametern von außerhalb des Kraftfahrzeugs und insbesondere mittels drahtloser Datenübertragung ausgewählt. Dies hat den Vorteil, dass das Kraftfahrzeug zur Neueinstellung der Auswahl von zu überwachenden Fahrzeugparametern nicht extra an einen dafür vorgesehenen Ort, beispielsweise eine Werkstatt, gebracht werden muss, sondern dass eine Neueinstellung, falls nötig, an jedem mit Hilfe des erfindungsgemäßen Verfahrens überwachten Kraftfahrzeug von einer Systemsteuerung aus vorgenommen werden kann.

Vorteilhafterweise werden die zu überwachenden Fahrzeugparametern aus einer Menge von Fahrzeugparametern ausgewählt, die folgende Elemente enthält: Öffnungszustand zumindest einer Fahrzeugtür, zumindest eines Fahrzeugfensters, eines Kofferraumdeckels, einer Motorhaube, eines Tankdeckels und/oder eines Sonnendachs; Zustand einer Schließanlage; Kilometerstand des Fahrzeugs; Ort des Fahrzeugs; Datum und Uhrzeit; ob eine Tür von innen oder von außen geöffnet wurde; Art des verwendeten Zugangsberechtigungssystems; Identifikation des Zugangsuchenden; Belegung der Fahrzeugsitze; Fahrerprofil; auf welche Weise der Motor gestartet wurde; Batteriestatus; Lichtstatus (insbesondere des Warnblinklichts); Reifendruck; Status einer Diebstahlwarnanlage; Status im Fahrzeug installierter elektronischer Geräte.

Neben der Überwachung der Fahrzeugtüren ist insbesondere auch die Überwachung der Fahrzeugfenster und des Sonnendachs besonders vorteilhaft, da es vorkommen kann, dass ein Benutzer des Kraftfahrzeugs trotz einer Verriegelung der Fahrzeugtüren vergisst, alle Fenster und das Sonnendach zu verschließen. Feststellbare Öffnungszustände können beispielsweise "geschlossen", "teilweise offen" und "ganz offen" sein.

Der Ort, an dem sich das Fahrzeug befindet, lässt sich beispielsweise bestimmen, indem das Fahrzeug mit dem globalen Positionsbestimmungssystem (GPS) in Kommunikationsverbindung steht. Der Aufenthaltsort des Fahrzeugs ist insbesondere im Falle eines Diebstahls des Kraftfahrzeugs. eine wertvolle Information.

Durch die Belegung der Fahrzeugsitze lässt sich nachvollziehen, ob sich zum Zeitpunkt des Diebstahls oder Einbruchs Personen oder Gegenstände im Kraftfahrzeug befunden haben. Durch die Feststellung der Art des Motoranlassens kann beispielsweise bei einem Diebstahl des Kraftfahrzeügs rekonstruiert werden, ob der Motor mit Hilfe eines autorisierten Schlüssels angelassen wurde oder ob er durch ein Hilfsmittel gestartet wurde.

Durch die Bestimmung des Zugangsberechtigungssystems (mechanischer Schlüssel, elektronischer Schlüssel (Funk, Infrarot, ...), Fingerabdruck, etc.), mit dem eine Fahrzeugtür betätigt wurde, lässt sich ferner feststellen, ob und wann eine Fahrzeugtür mit einem autorisierten Zugangsschlüssel bzw. von einem Zugangsberechtigten betätigt wurde, oder ob versucht wurde, die Fahrzeugtür mit einem fremden Schlüssel oder einem Schlüsselersatz zu öffnen.

Ein Fahrerprofil lässt sich beispielsweise anhand der Fahrersitz- und Lenkradeinstellung ermitteln. Durch die Überwachung des Status der Kraftfahrzeugbatterie lässt sich außerdem nachvollziehen, ob es möglicherweise zu irgendeinem Zeitpunkt innerhalb des Überwachungszeitraums einen Abfall der Batterieleistung gegeben hat, der beispielsweise einen undefinierten Zustand einer Fahrzeugtür, der Schließanlage und/ oder der Diebstahlwarnanlage hervorgerufen haben könnte, wodurch ein Diebstahl oder Einbruch erleichtert worden sein könnte.

Weiterer Gegenstand der Erfindung ist außerdem ein Überwachungssystem zur Dokumentation eines Diebstahls eines Kraftfahrzeugs oder eines Einbruchs in ein Kraftfahrzeug, insbesondere zum Durchführen des erfindungsgemäßen Verfahrens, mit einer Sensoreinheit zur Erfassung eines ausgewählten Satzes von zu überwachenden Fahrzeugparametern, einer mit der Sensoreinheit verbundenen Auswerteeinheit zum Detektieren einer Änderung eines der ausgewählten Fahrzeugparameter und einer mit der Auswerteeinheit kommunizierenden Speichereinrichtung, die einen Ausgangsparametersatz speichert und bei Änderung eines der ausgewählten Fahrzeugparameter zusätzlich wenigstens einen neuen Parametersatz speichert. Durch das erfindungsgemäße Überwachungssystem lassen-sich insbesondere die zuvor in Verbindung mit dem erfindungsgemäßen Verfahren genannten Vorteile erzielen.

Nachfolgend wird die vorliegende Erfindung rein beispielhaft anhand vorteilhafter Ausführungsformen und unter Bezugnahme auf die beigefügte Zeichnung beschrieben. Es zeigen:
- Fig. 1: das erfindungsgemäße Überwachungssystem gemäß einer ersten Ausführungsform mit einer im Fahrzeug befindlichen Speichereinrichtung; und
- Fig. 2: das erfindungsgemäße Überwachungssystem gemäß einer zweiten Ausführungsform mit einer außerhalb des Fahrzeugs gelegenen Speichereinrichtung und Systemsteuerung.

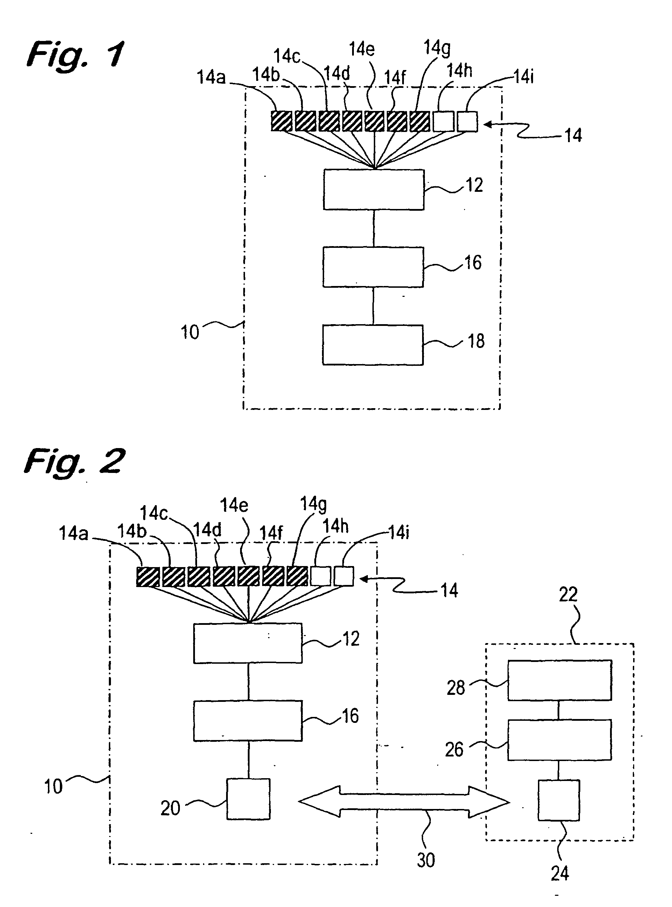

In Fig. 1 ist das erfindungsgemäße Überwachungssystem gemäß einer ersten Ausführungsform dargestellt. In einem Kraftfahrzeug 10 ist eine Sensoreinheit 12 zum Erfassen verschiedener, weiter unten näher erläuterter Fahrzeugparameter 14a-14i vorgesehen, die gemeinsam einen Parametersatz 14 bilden, der zur Abbildung oder Darstellung eines jeweiligen Zustandes des Kraftfahrzeugs 10 dient. Zur Erfassung der einzelnen Fahrzeugparameter 14a-14i ist die Sensoreinheit 12 mit geeigneten Sensoren und/oder mit einer Fahrzeugelektronik verbunden.

Ferner ist die Sensoreinheit 12 mit einer Auswerteeinheit 16 verbunden, in der die einzelnen, von der Sensoreinheit 12 erfassten Fahrzeugparameter 14a-14i verarbeitet und ausgewertet werden und durch die insbesondere eine Änderung eines der überwachten Parameter 14a-14i detektierbar ist.

Zur Speicherung von Parametersätzen 14, insbesondere eines Ausgangsparametersatzes und jeweils veränderter Parametersätze, ist die Auswerteeinheit 16 mit einer sich im Kraftfahrzeug 10 befindlichen Speichereinrichtung 18 verbunden.

Die in Fig. 2 gezeigte zweite Ausführungsform des erfindungsgemäßen Überwachungssystems unterscheidet sich von der in Fig. 1 dargestellten ersten Ausführungsform dadurch, dass der im Kraftfahrzeug 10 befindliche Teil des Überwachungssystems keine eigene Speichereinrichtung aufweist. Statt dessen ist im Kraftfahrzeug 10 eine mit der Auswerteeinheit 16 verbundene Sende/ Empfangseinheit 20 vorgesehen, die mittels drahtloser Datenübertragung, beispielsweise über Funk oder via Satellit, mit einer außerhalb des Kraftfahrzeugs 10 gelegenen Systemsteuerung 22 in Kommunikationsverbindung steht. Diese verfügt ihrerseits über eine entsprechend ausgebildete Sende/Empfangseinheit 24, die wiederum über eine Steuereinheit 26 mit einer Speichereinrichtung 28 verbunden ist.

Bei der in Fig. 2 dargestellten Ausführungsform handelt es sich um eine zweiseitige Kommunikationsverbindung 30 zwischen dem im Kraftfahrzeug 10 befindlichen Teil des Überwachungssystems und der Systemsteuerung 22, bei der nicht nur die erfassten Parametersätze 14 an die Systemsteuerung 22 übermittelt und in deren Speichereinrichtung 8 gespeichert werden, sondern in der entgegengesetzten Richtung bei Bedarf von der Steuereinheit 26 der Systemsteuerung 22 Steuersignale, beispielsweise zur Auswahl anderer zu überwachender Fahrzeugparameter, an den im Kraftfahrzeug 10 befindlichen Teil des Überwachungssystems gesendet werden können.

Die Kommunikationsverbindung zwischen dem im Kraftfahrzeug 10 befindlichen Teil des Überwachungssystems und der Systemsteuerung 22 könnte aber auch derart einseitig ausgebildet sein, dass die von der Sensoreinheit 12 erfassten Fahrzeugparametersätze 14 lediglich an die Systemsteuerung 22 übermittelt und in deren Speichereinrichtung 28 gespeichert werden. Darüber hinaus könnte neben einer Übermittelung der erfassten Datensätze 14 an die Systemsteuerung 22 und der Speicherung in deren Speichereinrichtung 28 zusätzlich - ähnlich wie bei der ersten Ausführungsform - eine Speicherung der erfassten Parametersätze 14 in einer im Kraftfahrzeug befindlichen Speichereinrichtung vorgesehen sein.

Während bei den in Fig. 1 und Fig. 2 gezeigten Ausführungsformen die Auswertung der erfassten Fahrzeugparameter 14a-14i und die Detektion einer Änderung in der im Fahrzeug 10 befindlichen Auswerteeinheit 16 erfolgt, ist es zusätzlich oder alternativ auch möglich, die erfassten Fahrzeugparameter 14a-14i direkt, d.h. mit anderen Worten als Rohdaten, an die Systemsteuerung 22 zu übermitteln und in einer darin vorgesehenen, nicht gezeigten Auswerteeinheit auszuwerten, die beispielsweise in die Steuereinheit 26 integriert oder zwischen die Steuereinheit 26 und die Speichereinrichtung 28 geschaltet sein könnte.

Die Systemsteuerung 22 ist, wie in Fig. 2 dargestellt ist, als zentrale Systemsteuerung derart ausgebildet, dass eine landesweite, kontinentweite oder sogar eine weltweite Überwachung aller mit Hilfe des erfindungsgemäßen Überwachungssystems bzw. -verfahrens überwachten Kraftfahrzeuge möglich ist. Es ist aber ebenso auch eine Vernetzung von mehreren dezentral angeordneten Systemsteuerungen denkbar.

Der Parametersatz 14 von erfassten bzw. überwachten Fahrzeugparametem 14a-14i umfasst vor allem solche Fahrzeugparameter, die geeignet sind, einen Einbruch in das Kraftfahrzeug 10 oder einen Diebstahl des Kraftfahrzeugs 10 zu rekonstruieren.

Derartige geeignete Fahrzeugparameter sind beispielsweise der Zustand der Kraftfahrzeug-Schließanlage und die Öffnungszustände der Fahrzeugtüren, wobei vorteilhafterweise alle Türen des Fahrzeugs überwacht werden, einschließlich der Heckklappe und der Motorhaube. Denkbar wäre prinzipiell aber auch die Erfassung der Öffnungszustände einiger ausgewählter Fahrzeugtüren. Neben der Erfassung, ob eine Tür geöffnet oder verschlossen ist, kann es außerdem sinnvoll sein, zu bestimmen, ob eine Tür von innerhalb des Kraftfahrzeugs 10 oder von außerhalb des Kraftfahrzeugs 10 geöffnet bzw. verschlossen wird und/oder welcher Schlüssel bzw. welche Art von Zugangsberechtigungssystem zum Öffnen bzw. Verriegeln der Tür verwendet wird. Letzteres kann beispielsweise dann relevant sein, wenn das Kraftfahrzeug 10 mit verschiedenen Schlüsseln ausgerüstet ist, die jeweils unterschiedlichen Fahrzeugbenutzern zugeordnet werden können. Gegebenenfalls lässt sich hierbei auch feststellen, ob ein Unbefugter versucht hat, sich mit einem nicht autorisierten Schlüssel Zugang zu dem Kraftfahrzeug 10 zu verschaffen. Detektierbare Zustände der Schließanlage können beispielsweise sein: "offen", "in Vorraste", "geschlossen", "verriegelt", "entriegelt", "gesichert", "entsichert".

Neben der Überwachung der Fahrzeugtüren ist es für die Rekonstruktion eines Diebstahls oder Einbruchs außerdem vorteilhaft, den Öffnungszustand aller oder zumindest ausgewählter Fahrzeugfenster, einschließlich eines Sonnendachs, zu erfassen. Der entsprechende Parameter kann dabei entweder binär sein, das heißt er kann den Wert "Fenster offen" oder "Fenster geschlossen" annehmen, oder der Parameter kann als kontinuierliche Größe ausgebildet sein, die anzeigt, wie weit das jeweilige Fenster geöffnet bzw. verschlossen ist. Vorzugsweise wird auch der Schließzustand des Tankdeckels überwacht, was bei der Feststellung, ob aus dem Kraftfahrzeug 10 Treibstoff gestohlen wurde, hilfreich sein kann.

Weitere diebstahl- bzw. einbruchsrelevante Informationen können ferner das Fahrerprofil, d.h. eine Information darüber, welche Person das Fahrzeug als letztes benutzt haben könnte, der Batteriestatus, der Lichtstatus (insbesondere der Status des Warnblinklichts) und/oder der Reifendruck sein. Sofern eine Diebstahlwarnanlage des Fahrzeugs 10 unabhängig von der Verriegelung des Kraftfahrzeugs 10 zu aktivieren ist, stellt auch der Status der Diebstahlwarnanlage einen Fahrzeugparameter dar, dessen Kenntnis wichtige Hinweise zur Rekonstruktion eines Einbruchs oder Diebstahls liefern kann. Darüber hinaus umfasst der zu überwachende Parametersatz 14 vorteilhafterweise auch den Kilometerstand des Fahrzeugs, den Aufenthaltsort des Fahrzeugs, der beispielsweise durch Kommunikation des Fahrzeugs mit dem globalen Positionsbestimmungssystem (GPS) bestimmbar ist, sowie das Datum und die Uhrzeit der Erfassung eines Parametersatzes 14.

Die Aufzählung der voranstehend beschriebenen überwachbaren Fahrzeugparameter ist nicht abschließend. In Frage kommen grundsätzlich alle diejenigen Fahrzeugparameter, die einen Zustand des Kraftfahrzeugs 10 derart abbilden, dass mit Hilfe der erfassten Kraftfahrzeugzustände ein Einbruch in das Kraftfahrzeug 10 bzw. ein Diebstahl des Kraftfahrzeugs 10 rekonstruierbar ist. Beispielsweise kann auch der Schließzustand des Verdecks eines Cabriolets oder die Auslösung eines Airbags erfasst werden. Denkbar wäre außerdem die Aufnahme von Geräuschen, insbesondere von Konversationen, innerhalb des Fahrgastraums mit Hilfe eines Mikrofons. Möglich ist auch die Überwachung von im Fahrzeug 10 installierten elektronischen Geräten, wie z.B. Telefon oder Autoradio, oder von Daten bzw. Informationen, die von der Systemsteuerung 22 an das Fahrzeug 10 gesandt werden.

Nachfolgend wird das erfindungsgemäße Verfahren zur Überwachung des Kraftfahrzeugs 10 beschrieben.

Da nicht bei jedem Kraftfahrzeug 10 notwendigerweise alle der grundsätzlich in Frage kommenden überwachbaren Fahrzeugparameter erfasst zu werden brauchen, wird in einem ersten Schritt des erfindungsgemäßen Verfahrens beispielsweise aus der voranstehend beschriebenen Aufzählung von Fahrzeugparametern ein geeigneter Satz 14 von Fahrzeugparametem ausgewählt, die zur Überwachung des jeweiligen Kraftfahrzeugs 10 erfasst werden sollen. Dieser Parametersatz 14 kann z.B. den Schließzustand der Fahrzeugtüren 14a, der jeweiligen Türfenster 14b, der Heckklappe 14c, des Heckklappenfensters 14d, der Tankklappe 14e, des Sonnendachs 14f, eines beliebigen anderen Fensters 14g, den Kilometerstand 14h sowie das Datum und die Uhrzeit 14i umfassen.

Die Einstellung, d.h. die Auswahl, des zu überwachenden Parametersatzes 14 erfolgt typischerweise bei der Installation des Überwachungssystems im Kraftfahrzeug 10, d.h. üblicherweise also bei der Herstellung des Kraftfahrzeugs 10 oder bei einer nachträglichen Ausrüstung des Kraftfahrzeugs 10 mit dem erfindungsgemäßen Überwachungssystem. Die Einstellung des zu überwachenden Parametersatzes 14 kann auch zu einem späteren Zeitpunkt durch eine autorisierte Person verändert werden, beispielsweise in einer Kfz-Werkstatt oder durch den Fahrzeughalter selbst. Die Auswerteeinheit 16 ist zu diesem Zweck mit einer geeigneten Eingabeschnittstelle (nicht gezeigt) versehen.

Sofern das Überwachungssystem des Kraftfahrzeugs 10 mit einer externen Systemsteuerung 22 in gegenseitiger Kommunikationsverbindung 30 steht (vgl. Fig. 2), ist es außerdem möglich, eine Neueinstellung des zu überwachenden Parametersatzes 14 von außerhalb des Kraftfahrzeugs 10 vorzunehmen, ohne dass das Kraftfahrzeug 10 in beispielsweise eine Kfz-Werkstatt gebracht werden muss.

Bei Beginn des eigentlichen Überwachungsvorgangs des erfindungsgemäßen Verfahrens wird zunächst ein Ausgangsparametersatz 14 erfasst, der den Ausgangszustand des Kraftfahrzeugs zu Beginn der Überwachung widerspiegelt. Dieser Ausgangsparametersatz 14 wird je nach Ausbildung des erfindungsgemäßen Überwachungssystems entweder in der im Kraftfahrzeug 10 befindlichen Speichereinrichtung 18 gespeichert (Fig. 1) oder durch die Sende/Empfangseinheit 20 an die Systemsteuerung 22 übermittelt und in deren Speichereinrichtung 28 gespeichert (Fig.2).

Vorzugsweise wird der Überwachungsvorgang bei einer Verriegelung des Kraftfahrzeugs 10 gestartet. Es ist aber ebenso möglich, den Überwachungsvorgang durch die Aktivierung einer Diebstahlwarnanlage in Gang zu setzen. Jede Verriegelung des Kraftfahrzeugs 10 bzw. Aktivierung der Diebstahlwarnanlage führt somit zu einer erneuten Erfassung und Speicherung eines jeweils aktuellen Ausgangszustands 14 des Kraftfahrzeugs 10.

Alternativ wäre es auch denkbar, den Überwachungsvorgang einmal zu starten, beispielsweise bei Verlassen des Kraftfahrzeugs 10 des Herstellungswerks oder bei Auslieferung des Kraftfahrzeugs 10 an einen Kunden, und danach ununterbrochen fortzusetzen. Auf diese Weise ließe sich eine "Historie" von Kraftfahrzeugzuständen über die gesamte Lebensdauer des Kraftfahrzeugs hinweg aufzeichnen.

Nach der Feststellung eines Ausgangsparametersatzes 14 werden die von der Sensoreinheit 12 erfassten Fahrzeugparameter 14a-14i entweder kontinuierlich oder in kurzen zeitlichen Abständen in der Auswerteeinheit 16 ausgewertet und dahingehend geprüft, ob eine Veränderung eines der erfassten Fahrzeugparameter 14a-14i stattgefunden hat. Eine solche Änderung eines Fahrzeugparameters 14a-14i wird jeweils durch Vergleich des gerade ermittelten Parameterwerts mit dem jeweils zuletzt bestimmten Parameterwert festgestellt. Sobald mindestens einer der zu überwachenden Fahrzeugparameter 14a-14i eine Änderung erfahren hat, d.h. also sobald eine Änderung im Zustand des Kraftfahrzeugs 10 eingetreten ist, wird ein neuer, den jeweils neu eingetretenen Zustand des Kraftfahrzeugs 10 abbildender Parametersatz 14 zusätzlich zum Ausgangsparametersatz 14 bzw. zu den seit Beginn des Überwachungsvorgangs bereits erfassten und abgespeicherten veränderten Parametersätzen 14 in der Speichereinrichtung 18, 28 abgespeichert.

Dabei muss nicht notwendigerweise die Änderung eines jeden überwachten Fahrzeugparameters 14a-14i zu einer Aufzeichnung bzw. Abspeicherung eines neuen Parametersatzes 14 führen. Bei der in Fig. 2 dargestellten Ausführungsform bewirken - im Gegensatz zu der in Fig. 1 gezeigten Ausführungsform - nur vorbestimmte Ereignisse, d.h. nur die Änderungen ganz bestimmter, aus der Menge der Fahrzeugparameter 14a-14i ausgewählter Parameter 14a-14g eine Speicherung eines neuen Parametersatzes 14.

So ist es hinsichtlich einer Rekonstruktion eines Diebstahls oder Einbruchs in ein Kraftfahrzeug 10 sicherlich sinnvoll, den Schließzustand der Fahrzeugtüren, der Fahrzeugfenster und gegebenenfalls des Sonnendachs oder Kofferraumdeckels zu überwachen. Dagegen ist es im Falle eines sich kontinuierlich verändernden Parameterwerts, wie z.B. dem Kilometerstand 14h des Kraftfahrzeugs 10, nicht unbedingt erforderlich, bei dessen laufender Veränderung ständig neue Parametersätze 14 abzuspeichern. Da auch die Uhrzeit sich kontinuierlich ändert, ist dieser Parameter 14i ebenso wenig geeignet, um bei jeder Änderung eine Speicherung eines neuen Parametersatzes 14 zu bewirken. Denkbar wäre hingegen eine Abspeicherung neuer Parametersätze 14 in zeitlich vorbestimmten Intervallen, beispielsweise in der Größenordnung von Stunden, oder eine Abspeicherung eines neuen Parametersatzes 14 bei jedem Datumswechsel.

Die Auswahl derjenigen Fahrzeugparameter 14a-14i (Fig. 1) bzw. 14a-14g (Fig. 2), deren Änderung auf jeden Fall eine Abspeicherung eines neuen Parametersatzes 14 bewirkt, kann ebenso wie die Auswahl des zu erfassenden Parametersatzes 14 bei Einbau des Überwachungssystems in das Kraftfahrzeug 10 im Herstellungswerk oder auch nachträglich beispielsweise in einer geeigneten Kfz-Werkstatt erfolgen. Sofern das Überwachungssystem des Kraftfahrzeugs 10 mit einer Systemsteuerung 22 in gegenseitiger Kommunikationsverbindung 30 steht, ist - wie bereits im Zusammenhang mit der Einstellung des Parametersatzes 14 erwähnt - eine neue Auswahl prinzipiell zu einem beliebigen Zeitpunkt durch die Systemsteuerung 22 treffbar, ohne dass der Kraftfahrzeughalter dazu eine Werkstatt aufsuchen müsste.

Es ist ferner möglich, dass eine Parameteränderung nicht nur zur Aufzeichnung eines einzelnen neuen Parametersatzes 14 führt; sondern eine filmartige Aufzeichnung und Speicherung neuer Parametersätze 14 ausgelöst wird. Eine solche filmartige Aufzeichnung kann beispielsweise aus einer Reihe von Parametersätzen 14 bestehen, die in kurzen zeitlichen Abständen aufeinander folgend erfasst und abgespeichert werden. Je nach Einstellung des Überwachungssystems kann eine solche filmartige Aufzeichnung über einen vorbestimmten Zeitraum hinweg, beispielsweise in der Größenordnung von Minuten, erfolgen.

Denkbar ist außerdem, dass nicht jeder Fahrzeugparameter bei seiner Änderung zu einer Speicherung einer Serie von Parametersätzen führt. Es könnte unter den überwachten Fahrzeugparametern einerseits solche geben, die zur Speicherung einer filmartigen Sequenz von Parametersätzen führen, und andererseits solche, die lediglich eine Speicherung eines einzelnen neuen Parametersatzes bewirken.

Sobald ein Einbruch in das Kraftfahrzeug 10 angezeigt oder ein Diebstahl des Kraftfahrzeugs 10 gemeldet wurde, werden die gespeicherten Parametersätze 14 entweder aus der lokalen, im Kraftfahrzeug 10 befindlichen Speichereinrichtung 18 oder aus der Speichereinrichtung 28 der Systemsteuerung 22 ausgelesen. Ausgehend von dem Ausgangsparametersatz 14 lässt sich anhand der jeweils veränderten Parametersätze 14 die Entwicklung der überwachten Fahrzeugparameter 14a-14i und somit die Zustandsänderung oder Zustandsänderungen am Kraftfahrzeug nachvollziehen. Dies erleichtert die Rekonstruktion des Einbruchs oder des Diebstahls und/oder ermöglicht ggf. eine Einschätzung, ob den Fahrzeughalter an dem Diebstahl oder Einbruch eine Mitschuld trifft, weil er beispielsweise trotz ordnungsgemäßer Verriegelung des Kraftfahrzeugs und Aktivierung der Diebstahlwarnanlage vergaß, alle Fenster des Kraftfahrzeugs vollständig zu schließen, oder ob der Fahrzeughalter einen Einbruch oder Diebstahl möglicherweise nur vorgetäuscht hat.

### Bezugszeichenliste

- 10: Kraftfahrzeug
- 12: Sensoreinheit
- 14: Fahrzeugparameter
- 16: Auswerteeinheit
- 18: Speichereinrichtung
- 20: Sende/Empfangseinheit
- 22: Systemsteuerung
- 24: Sende/Empfangseinheit
- 26: Steuereinheit
- 28: Speichereinrichtung
- 30: Kommunikationsverbindung

## Patentansprüche

1. Verfahren zur Überwachung eines Kraftfahrzeugs (10), insbesondere zur Dokumentation eines Diebstahls des Kraftfahrzeugs (10) oder eines Einbruchs in das Kraftfahrzeug (10), bei dem
aus einer vorgegebenen Menge von überwachbaren Fahrzeugparametem ein Satz (14) von zu überwachenden Fahrzeugparametem (14a-14i) ausgewählt wird,
ein einen Ausgangszustand des Kraftfahrzeugs abbildender Ausgangsparametersatz (14) der ausgewählten Fahrzeugparameter bestimmt und abgespeichert wird,
eine nach der Bestimmung des Ausgangsparametersatzes (14) erfolgende Änderung mindestens eines der ausgewählten Fahrzeugparameter (14a-14i) detektiert wird, und
bei Änderung mindestens eines der ausgewählten Fahrzeugparameter (14a-14i; 14a-14g) wenigstens ein neuer Parametersatz (14) bestimmt und zusätzlich abgespeichert wird, der den jeweils veränderten Ist-Zustand des Kraftfahrzeugs (10) abbildet.

2. Verfahren nach Anspruch 1,
**dadurch gekennzeichnet,**
**dass** die Änderung mindestens eines der ausgewählten Fahrzeugparameter (14a-14i; 14a-14g) anhand der jeweils zuletzt gespeicherten Parametereinstellung ermittelt wird.

3. Verfahren nach Anspruch 1 oder 2,
**dadurch gekennzeichnet,**
**dass** nach jeder Änderung mindestens eines der ausgewählten Fahrzeugparameter (14a-14i; 14a-14g) genau ein neuer Parametersatz (14) bestimmt und gespeichert wird.

4. Verfahren nach einem der vorherigen Ansprüche,
**dadurch gekennzeichnet,**
**dass** nach Änderung mindestens eines der ausgewählten Fahrzeugparameter (14a-14i; 14a-14g) über einen vorbestimmten Zeitraum hinweg in vorbestimmten Zeitabständen neue Parametersätze (14) bestimmt und gespeichert werden.

5. Verfahren nach einem der vorherigen Ansprüche,
**dadurch gekennzeichnet,**
**dass** der Ausgangsparametersatz (14) und die jeweils neuen Parametersätze (14) in einer im Fahrzeug befindlichen Speichereinrichtung (18) gespeichert werden.

6. Verfahren nach einem der vorherigen Ansprüche,
**dadurch gekennzeichnet,**
**dass** der Ausgangsparametersatz (14) und die jeweils neuen Parametersätze (14) mittels einer Sendeeinheit (20) an eine außerhalb des Fahrzeugs gelegene Speichereinrichtung (28) gesendet und in dieser gespeichert werden.

7. Verfahren nach einem der vorherigen Ansprüche,
**dadurch gekennzeichnet,**
**dass** die gespeicherten Parametersätze (14), insbesondere nach einem Einbruch in das Kraftfahrzeug und/oder nach einem Diebstahl des Kraftfahrzeugs (10), aus der Speichereinrichtung (18; 28) ausgelesen werden.

8. Verfahren nach einem der vorherigen Ansprüche,
**dadurch gekennzeichnet,**
**dass** aus dem ausgewählten Parametersatz (14a-14i) eine Teilmengevon Fahrzeugparametem (14a-14g) ausgewählt wird, auf welche die Detektion von Änderungen beschränkt ist.

9. Verfahren nach einem der vorherigen Ansprüche,
**dadurch gekennzeichnet,**
**dass** der Parametersatz (14a-14i) und/oder die Teilmenge von Fahrzeugparametern (14a-14g) bei der Herstellung des Kraftfahrzeugs (10) ausgewählt wird bzw. werden.

10. Verfahren nach einem der vorherigen Ansprüche,
**dadurch gekennzeichnet,**
**dass** der Parametersatz (14a-14i) und/oder die Teilmenge von Fahrzeugparametern (14a-14g) zu einem späteren Zeitpunkt nach der Herstellung des Kraftfahrzeugs (10) ausgewählt wird bzw. werden.

11. Verfahren nach einem der vorherigen Ansprüche,
**dadurch gekennzeichnet,**
**dass** der Parametersatz (14a-14i) und/oder die Teilmenge von Fahrzeugparametern (14a-14g) von außerhalb des Kraftfahrzeugs (10) und insbesondere mittels drahtloser Datenübertragung ausgewählt wird bzw. werden.

12. Verfahren nach einem der vorherigen Ansprüche,
**dadurch gekennzeichnet,**
**dass** der Ausgangsparametersatz (14) ereignisgesteuert, beispielsweise bei Verriegelung des Kraftfahrzeugs (10), bei Aktivierung einer Alarmanlage des Kraftfahrzeugs (10), oder bei Auslieferung des Kraftfahrzeugs (10) aus dem Herstellungswerk, und/oder zeitgesteuert bestimmt wird.

13. Verfahren nach einem der vorherigen Ansprüche,
**dadurch gekennzeichnet,**
**dass** die Bestimmung des Ausgangsparametersatzes (14) von außerhalb des Kraftfahrzeugs und insbesondere mittels drahtloser Datenübertragung ausgelöst wird.

14. Verfahren nach einem der vorherigen Ansprüche,
**dadurch gekennzeichnet,**
**dass** die zu überwachenden Fahrzeugparameter (14a-14i) aus einer Menge von Fahrzeugparametern ausgewählt werden, die folgende Elemente enthält: Öffnungszustand zumindest einer Fahrzeugtür, zumindest eines Fahrzeugfensters, eines Kofferraumdeckels, einer Motorhaube, eines Tankdeckels und/oder eines Sonnendachs; Zustand einer Schließanlage; Kilometerstand des Fahrzeugs; Ort des Fahrzeugs; Datum und Uhrzeit; ob eine Tür von innen oder von außen geöffnet wurde; Art des verwendeten Zugangsberechtigungssysterms; Identifikation des Zugangsuchenden; Belegung der Fahrzeugsitze; Fahrerprofil; auf welche Weise der Motor gestartet wurde; Batteriestatus; Lichtstatus; Reifendruck; Status einer Diebstahlwarnanlage; Status im Fahrzeug installierter elektronischer Geräte.

15. Überwachungssystem zur Dokumentation eines Diebstahls eines Kraftfahrzeugs (10) oder eines Einbruchs in ein Kraftfahrzeug (10), insbesondere zum Durchführen des Verfahrens nach einem der vorherigen Ansprüche, mit
einer Sensoreinheit (12) zur Erfassung eines ausgewählten Satzes (14) von zu überwachenden Fahrzeugparametern (14a-14i),
einer mit der Sensoreinheit (12) verbundenen Auswerteeinheit (16) zum Detektieren einer Änderung eines der ausgewählten Fahrzeugparameter (14a-14i) und
einer mit der Auswerteeinheit (16) kommunizierenden Speichereinrichtung (18; 28), die einen Ausgangsparametersatz (14) speichert und bei Änderung eines der ausgewählten Fahrzeugparameter (14a-14i; 14a-14g) zusätzlich wenigstens einen neuen Parametersatz (14) speichert.

16. System nach Anspruch 15,
**dadurch gekennzeichnet,**
**dass** die Auswerteeinheit (16) mit einer außerhalb des Kraftfahrzeugs (10) gelegen Speichereinrichtung (28) in Kommunikationsverbindung (30) steht.

17. System nach Anspruch 15 oder 16,
**dadurch gekennzeichnet,**
**dass** die Auswerteeinheit (16) mit einer außerhalb des Kraftfahrzeugs (10) gelegen Systemsteuerung (22) in Kommunikationsverbindung (30) steht.

18. System nach einem der Ansprüche 15 bis 17,
**dadurch gekennzeichnet,**
**dass** die Auswerteeinheit (16) mit dem globalen Positionsbestimmungssystem (GPS) in Kommunikationsverbindung steht.

## Claims

1. Method for monitoring a motor vehicle (10), in particular for documenting a theft of the motor vehicle (10) or a break-in into the motor vehicle (10) in which
- out of a specified number out of a specified number of monitorable vehicle parameters a set (14) of vehicle parameters (14a-14i) to be monitored is selected,
- an initial parameter set (14) of the selected vehicle parameters replicating an initial state of the motor vehicle is determined and stored,
- any change in at least one of the selected vehicle parameters occurring after determination of the initial parameter set (14) is detected, and
- on change of at least one of the selected vehicle parameters (14a-14i; 14a-14g) at least one new parameter set (14) is determined and additionally stored which replicates the changed actual state of the motor vehicle (10) at the time.

2. Method according to claim 1, **characterised in that** the change of at least one of the selected vehicle parameters (14a-14i; 14a-14g) is determined with reference to the last stored parameter setting at the time.

3. Method according to claim 1 or 2, **characterised in that** after each change of at least one of the selected vehicle parameters (14a-14i; 14a-14g) exactly one new parameter set (14) is determined and stored.

4. Method according to one of the preceding claims, **characterised in that** after change of at least one of the selected vehicle parameters (14a-14i; 14a-14g) new parameter sets (14) are determined and stored at predetermined intervals of time over a predetermined period of time.

5. Method according to one of the preceding claims, **characterised in that** the initial parameter set (14) and the new parameter sets (14) at any time are stored in a memory device (18) located in the vehicle.

6. Method according to one of the preceding claims, **characterised in that** the initial parameter set (14) and the new parameter sets (14) at any time are transmitted by means of a transmitter unit (20) to a memory device (28) located outside the vehicle.

7. Method according to one of the preceding claims, **characterised in that** the stored parameter sets (14) are read out of the memory device (18; 28), in particular after a break-in into the motor vehicle and/or after a theft of the motor vehicle (10).

8. Method according to one of the preceding claims, **characterised in that** from the selected parameter set (14a-14i) a subgroup of vehicle parameters (14a-14g) is selected to which the detection of changes is restricted.

9. Method according to one of the preceding claims, **characterised in that** the parameter set (14a-14i) and/or the subgroup of vehicle parameters (14a-14g) is or are selected during production of the motor vehicle (10).

10. Method according to one of the preceding claims, **characterised in that** the parameter set (14a-14i) and/or the subgroup of vehicle parameters (14a-14g) is or are selected at a later point in time after production of the motor vehicle (10).

11. Method according to one the preceding claims, **characterised in that** the parameter set (14a-14i) and/or the subgroup of vehicle parameters (14a-14g) is or are selected from outside the motor vehicle (10) and in particular by means of wireless data transmission.

12. Method according to one of the preceding claims, **characterised in that** the initial parameter set (14) is determined in event-controlled manner, for example on locking the motor vehicle (10) or on dispatch of the motor vehicle (10) from the production factory and/or in time-controlled manner.

13. Method according to one of the preceding claims, **characterised in that** the determination of the initial parameter set (14) is triggered from outside the motor vehicle and in particular by wireless data transmission.

14. Method according to one of the preceding claims, **characterised in that** the vehicle parameters (14a-14i) to be monitored are selected from a number of vehicle parameters comprising the following elements: state of openness of at least one vehicle door, of at least one vehicle window, of a boot lid, of an engine bonnet, of a filler cap and/or of a sun roof; state of a locking system; mileage of the vehicle; location of the vehicle; date and time; whether a door has been opened from the inside or the outside; type of access authorisation system used; identification of the person seeking access; occupation of the seats in the vehicle; driver profile; the manner in which the engine was started; battery status; status of lights; tyre pressure; status of a theft alarm system; status of electronic equipment installed in the vehicle.

15. Monitoring system for documenting a theft of a motor vehicle (10) or a break-in into a motor vehicle (10), in particular for carrying out the method according to one of the preceding claims, having
a sensor unit (12) for capturing a selected set (14) of vehicle parameters (14a-14i) to be monitored,
an evaluating unit (16) connected to the sensor unit (12) for detecting an alteration of one of the selected vehicle parameters (14a-14i)and
a memory device (18; 28) communicating with the evaluating unit (16) which stores an initial parameter set (14) and on change of one of the selected vehicle parameters (14a-14i; 14a-14g) additionally stores at least one new parameter set.

16. System according to claim 15, **characterised in that** the evaluating unit (16) has a communications link (30) to a memory device (28) located outside the motor vehicle (10).

17. System according to claim 15 or 16, **characterised in that** the evaluating unit (16) has a communications link (30) to a system control (22) located outside the motor vehicle (10).

18. System according to one of the claims 15 to 17, charactised in that the evaluating unit (16) stands in communicating connection with the global positioning system (GPS).

## Revendications

1. Procédé de surveillance d'un véhicule automobile (10), en particulier pour documenter un vol du véhicule automobile (10) ou une effraction du véhicule automobile (10), dans lequel
à partir d'une quantité prédéfinie de paramètres du véhicule pouvant être surveillés on sélectionne un ensemble (14) de paramètres (14a-14i) à surveiller du véhicule,
un ensemble de paramètres initiaux (14) reproduisant un état initial du véhicule automobile, parmi les paramètres sélectionnés du véhicule, est déterminé et mémorisé,
on détecte une variation, se produisant après détermination de l'ensemble de paramètres initiaux (14), d'au moins l'un des paramètres sélectionnés (14a-14i) du véhicule, et
en cas de variation d'au moins l'un des paramètres (14a-14i ; 14a-14g) sélectionnés, on détermine au moins un nouvel ensemble de paramètres (14) que l'on mémorise en supplément et qui reproduit l'état réel modifié du véhicule automobile (10).

2. Procédé selon la revendication 1,
**caractérisé**
**en ce que** la variation d'au moins l'un des paramètres (14a-14i ; 14a-14g) sélectionnés du véhicule est déterminée à l'aide du réglage de paramètres mémorisé en dernier.

3. Procédé selon la revendication 1 ou 2,
**caractérisé**
**en ce qu'**après chaque modification d'au moins l'un des paramètres (14a-14i ; 14a-14g) sélectionnés du véhicule, on détermine et mémorise exactement un nouvel ensemble de paramètres (14).

4. Procédé selon l'une des revendications précédentes,
**caractérisé**
**en ce qu'**après modification d'au moins l'un des paramètres (14a-14i ; 14a-14g) sélectionnés du véhicule sur une durée prédéterminée, on détermine et mémorise de nouveaux ensembles de paramètres (14) à intervalles de temps prédéterminés.

5. Procédé selon l'une des revendications précédentes,
**caractérisé**
**en ce que** l'ensemble de paramètres initiaux (14) et les nouveaux ensembles de paramètres (14) sont mémorisés dans un dispositif à mémoire (18) se trouvant dans le véhicule.

6. Procédé selon l'une des revendications précédentes,
**caractérisé**
**en ce que** l'ensemble de paramètres initiaux (14) et les nouveaux ensembles de paramètres (14) sont envoyés, au moyen d'une unité d'émission (20), à un dispositif à mémoire (28) situé à l'extérieur du véhicule et sont mémorisés dans celui-ci.

7. Procédé selon l'une des revendications précédentes,
**caractérisé**
**en ce que** les ensembles de paramètres (14) mémorisés, en particulier après une effraction du véhicule et/ou après un vol du véhicule automobile (10), sont extraits du dispositif à mémoire (18 ; 28).

8. Procédé selon l'une des revendications précédentes,
**caractérisé**
**en ce qu'**à partir du jeu de paramètres (14a-14i) sélectionnés on sélectionne une quantité partielle de paramètres (14a-14g) du véhicule auxquels la détection de modifications est limitée.

9. Procédé selon l'une des revendications précédentes,
**caractérisé**
**en ce que** l'ensemble de paramètres (14a-14i) et/ou la quantité partielle de paramètres (14a-14g) du véhicule est ou sont sélectionnés lors de la construction du véhicule automobile (10).

10. Procédé selon l'une des revendications précédentes,
**caractérisé**
**en ce que** l'ensemble de paramètres (14a-14i) et/ou la quantité partielle de paramètres (14a-14g) du véhicule est ou sont sélectionnés à une date ultérieure après la construction du véhicule automobile (10).

11. Procédé selon l'une des revendications précédentes,
**caractérisé**
**en ce que** l'ensemble de paramètres (14a-14i) et/ou la quantité partielle de paramètres (14a-14g) du véhicule est ou sont sélectionnés de l'extérieur du véhicule automobile (10) et en particulier au moyen d'une transmission de données sans fil.

12. Procédé selon l'une des revendications précédentes,
**caractérisé**
**en ce que** l'ensemble de paramètres initiaux (14) est déterminé de manière commandée par un événement, par exemple au verrouillage du véhicule automobile (10), à l'activation d'un système d'alarme du véhicule automobile (10), ou à la livraison du véhicule automobile (10) depuis l'usine du constructeur, et/ou est déterminé de manière commandée dans le temps.

13. Procédé selon l'une des revendications précédentes,
**caractérisé**
**en ce que** la détermination de l'ensemble de paramètres initiaux (14) est déclenchée de l'extérieur du véhicule automobile et en particulier au moyen d'une transmission de données sans fil.

14. Procédé selon l'une des revendications précédentes,
**caractérisé**
**en ce que** les paramètres à surveiller (14a-14i) du véhicule sont sélectionnés parmi une quantité de paramètres du véhicule qui contient les éléments suivants : état d'ouverture d'au moins une porte du véhicule, d'au moins une fenêtre du véhicule, d'un capot de coffre à bagages, d'un capot de moteur, d'un bouchon de réservoir et/ou d'un toit pare-soleil ; état d'un système de fermeture ; kilométrage du véhicule ; emplacement du véhicule ; date et heure ; si une porte a été ouverte de l'intérieur ou de l'extérieur ; type du système d'autorisation d'accès utilisé ; identification de la personne cherchant l'accès ; occupation des sièges du véhicule ; profil du conducteur ; de quelle manière le moteur a été mis en marche ; état de la batterie ; état de l'éclairage ; pression des pneus ; état d'un système antivol ; état des appareils électroniques installés dans le véhicule.

15. Système de surveillance pour documenter un vol d'un véhicule automobile (10) ou une effraction d'un véhicule automobile (10), en particulier pour la mise en oeuvre du
procédé selon l'une des revendications précédentes, comportant
une unité de détection (12) pour détecter un ensemble (14) sélectionné de paramètres (14a-14i) à sélectionner du véhicule,
une unité d'exploitation (16) reliée à l'unité de détection (12) pour détecter une variation de l'un des paramètres (14a-14i) sélectionnés du véhicule et
un dispositif à mémoire (18 ; 28) communiquant avec l'unité d'exploitation (16), qui mémorise un ensemble de paramètres initiaux (14) et qui, en cas de variations de l'un des paramètres (14a-14i ; 14a-14g) sélectionnés du véhicule, mémorise en outre au moins un nouvel ensemble de paramètres (14).

16. Système selon la revendication 15,
**caractérisé**
**en ce que** l'unité d'exploitation (16) est en liaison de communication (30) avec un dispositif à mémoire (28) situé à l'extérieur du véhicule automobile (10).

17. Système selon la revendication 15 ou 16,
**caractérisé**
**en ce que** l'unité d'exploitation (16) est en liaison de communication (30) avec une commande du système (22) située à l'extérieur du véhicule automobile (10).

18. Système selon l'une des revendications 15 à 17,
**caractérisé**
**en ce que** l'unité d'exploitation (16) est en liaison de communication avec le système positionnement global (GPS).
